(19) Europäisches Patentamt
European Patent Office
Office européen des brevets

(11) **EP 2 140 287 B1**

(12) **EUROPÄISCHE PATENTSCHRIFT**

(45) Veröffentlichungstag und Bekanntmachung des Hinweises auf die Patenterteilung:
**03.11.2010 Patentblatt 2010/44**

(21) Anmeldenummer: **08717325.8**

(22) Anmeldetag: **03.03.2008**

(51) Int Cl.:
*G01S 11/12* *(2006.01)*     *G01S 13/86* *(2006.01)*
*G01S 13/93* *(2006.01)*

(86) Internationale Anmeldenummer:
**PCT/EP2008/052562**

(87) Internationale Veröffentlichungsnummer:
**WO 2008/128814 (30.10.2008 Gazette 2008/44)**

(54) **FAHRERASSISTENZSYSTEM UND VERFAHREN ZUR OBJEKTPLAUSIBILISIERUNG**

DRIVER ASSISTANCE SYSTEM AND METHOD FOR DETERMINING THE PLAUSIBILITY OF OBJECTS

SYSTÈME D'ASSISTANCE AU CONDUCTEUR ET PROCÉDÉ POUR AMÉLIORER LA VRAISEMBLANCE LIÉE À DES D'OBJETS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.04.2007 DE 102007018470**

(43) Veröffentlichungstag der Anmeldung:
**06.01.2010 Patentblatt 2010/01**

(73) Patentinhaber: **Robert Bosch GmbH**
**70442 Stuttgart (DE)**

(72) Erfinder:
• **FOCKE, Thomas**
**31180 Ahrbergen (DE)**
• **BECKER, Jan-Carsten**
**94304 Palo Alto (US)**
• **HILSEBECHER, Joerg**
**31135 Hildesheim (DE)**
• **ZENDER, Arne**
**31162 Bad Salzdetfurth (DE)**
• **MUELLER, Mario**
**30519 Hannover (DE)**
• **SPARBERT, Jan**
**71277 Rutesheim (DE)**
• **SCHOEBERL, Thomas**
**31139 Hildesheim (DE)**
• **OECHSLE, Fred**
**71642 Ludwigsburg (DE)**
• **GRIMM, Andreas**
**75233 Tiefenbronn-Muehlhausen (DE)**
• **SIMON, Andreas**
**38302 Wolfenbuettel (DE)**

(56) Entgegenhaltungen:
EP-A- 1 338 477       EP-A- 1 690 730
WO-A-03/031228       WO-A-2006/015894
US-A1- 2006 091 654

**Beschreibung**

Stand der Technik

Die Erfindung betrifft ein Verfahren zur Objektplausibilisierung bei Fahrerassistenzsystemen für Kraftfahrzeuge, bei dem aus Ortungsdaten von zwei unabhängig voneinander arbeitenden Objektortungssystemen des Fahrzeugs für ein Objekt, das von beiden Ortungsystemen geortet wird, zwei Meßgrößen abgeleitet werden, je eine für jedes Ortungssystem, die ein und denselben physikalischen Parameter repräsentieren, und bei dem dann die beiden Meßgrößen auf Konsistenz geprüft werden. Gegenstand der Erfindung ist außerdem ein Fahrerassistenzsystem, das zur Ausführung dieses Verfahrens eingerichtet ist.

Beispiele für Fahrerassistenzsysteme, bei denen die Erfindung anwendbar ist, sind etwa sogenannte prädiktive Sicherheitssysteme (PSS; Predictive Safety System) sowie automatische Abstandsregelsysteme (ACC, Adaptive Cruise Control). Bei beiden Typen von Fahrerassistenzsystemen ist mindestens ein Objektortungssystem, beispielsweise ein Radarsystem oder ein videobasiertes System dazu vorgesehen, das Umfeld des mit dem Assistenzsystem ausgerüsteten Fahrzeugs zu überwachen und Objekte im Umfeld des Fahrzeugs, insbesondere vorausfahrende Fahrzeuge und sonstige Hindernisse zu orten.

Bei einem PSS-System wird anhand der Ortungsdaten "vorausschauend" berechnet, ob es zu einer Kollision mit einem Objekt kommen wird, und bei akuter Kollisionsgefahr wird ein Warnsignal ausgegeben. Dieses Warnsignal wird beispielsweise in ein akustisches Signal umgesetzt, das den Fahrer auf die Gefahr aufmerksam machen soll. Es sind auch Systeme in Entwicklung, bei denen das Warnsignal unmittelbar einen automatischen Eingriff in die Längsführung des Fahrzeugs ausläßt, beispielsweise eine Notbremsung, um die Kollision noch abzuwenden oder zumindest deren Folgen zu mildern.

Solche Systeme stellen jedoch sehr hohe Anforderungen an die Genauigkeit und Verläßlichkeit des Ortungssystems, da es andernfalls häufig zu Fehlauslösungen kommen kann, die ihrerseits eine erhebliche Gefahrenquelle darstellen können.

Die Verläßlichkeit der Objektortung kann dadurch verbessert werden, daß zwei unabhängig voneinander arbeitende Ortungssysteme vorgesehen werden, so daß eine gewisse Redundanz erreicht wird.

DE 103 99 943 A1 beschreibt ein Verfahren, das mit zwei unabhängigen Ortungssystemen arbeitet, von denen eines longitudinalwertoptimierte Daten liefert, während das andere System lateralwert- oder lateralausdehnungsoptimierte Daten liefert.

Ein Beispiel für ein longitudinalwertoptimiertes System ist ein Radarsystem, das relativ genaue Meßwerte für den Abstand und die Relativgeschwindigkeit eines Objekts liefert, jedoch auch dann, wenn der Radarsensor ein gewisses Winkelauflösungsvermögen aufweist, nur ungenaue Daten für den Azimutwinkel und damit die laterale Position des Objekts liefert. Auch die laterale Ausdehnung des Objekts kann mit einem solchen Sensor allenfalls sehr grob bestimmt werden.t

Ein Beispiel für ein lateralwertoptimiertes System ist ein videobasiertes System, also beispielsweise eine Videokamera mit zugehöriger Bildverarbeitungselektronik. Ein solches System vermag relativ genaue Daten über den Azimutwinkel und die laterale Ausdehnung eines Objekts zu liefern, ermöglicht jedoch, insbesondere bei monokularen Systemen, nur eine ungenaue Bestimmung oder Schätzung des Objektabstands, und die Relativgeschwindigkeit kann nur indirekt durch zeitliche Ableitung der ungenauen Abstandsdaten bestimmt werden. Bei einem monokularen Videosystem kann der Abstand nur grob anhand der Höhe des Objekts im Videobild relativ zu Höhe der Horizontlinie geschätzt werden. Gegebenenfalls kann durch eine Fahrbahnschätzung die Genauigkeit etwas verbessert werden. Ein binokulares Videosystem ermöglicht eine Abstandsbestimmung durch Triangulation, liefert jedoch insbesondere bei größeren Abständen ebenfalls nur relativ ungenaue Werte.

In der genannten Druckschrift wird vorgeschlagen, die Ortungsdaten der beiden Systeme miteinander abzugleichen, um genauere und plausiblere Ortungsdaten über die georteten Objekte zu gewinnen. Dieser Vorgang wird als Objektplausibilisierung bezeichnet. Wenn mit Hilfe eines der beiden Systeme ein vermeintliches Objekt geortet wurde, so läßt sich mit hoher Wahrscheinlichkeit sagen, daß es sich um ein reales Objekt handelt, wenn die Ortungsdaten durch das jeweilige andere System bestätigt werden.

Durch die Fusion der Ortungsdaten der beiden Ortungssysteme können mit gewissen Ausmaß auch die jeweiligen Schwächen dieser Systeme ausgeglichen werden. Wenn beispielsweise das longitudinalwertoptimierte System ein Objekt ortet, dessen laterale Position und Ausdehnung nur innerhalb relativ weiter Toleranzgrenzen angegeben werden können, so kann mit Hilfe des lateralwertoptimierten Systems geprüft werden, ob von diesem System ein Objekt geortet wird, das innerhalb der weiten Toleranzgrenzen liegt. Das lateralwertoptimierte System wird dann seinerseits für den Abstand des Objekts nur innerhalb relativ großer Fehlergrenzen angeben können. Wenn nun der vom longitudinalwertoptimierten System gemessene Abstand innerhalb dieser Fehlergrenzen liegt, so ist die Annahme plausibel, daß es sich bei den von beiden System georteten Objekten um dasselbe physikalische Objekt handelt, und der genaue Abstand und die Relativgeschwindigkeit, die mit dem longitudinalwertoptimierten System gemessen wurden, können mit den genauen Daten über die genaue laterale Position und die laterale Ausdehnung kombiniert werden, die von dem lateralwertoptimierten System gemessen wurden.

Es verbleibt jedoch eine gewisse Unsicherheit hinsichtlich der Frage, ob die von den beiden unabhängigen Systemen gelieferten Ortungsdaten wirklich dasselbe reale Objekt beschreiben oder nicht. Dies gilt naturgemäß vor allem bei zwei relativ nahe beieinander liegenden Objekten oder allgemein bei relativ hoher Objektdichte.

DE 10 2004 046 360 A1 beschreibt ein PSS-System, bei dem zur Bestimmung der Kollisionsgefahr die sogenannte "time to collision" vorausberechnet wird, d. h. die Zeit, die voraussichtlich noch bis zur Kollision mit dem Objekt vergehen wird, wenn sich die dynamischen Daten des eigenen Fahrzeugs und des georteten Objekts nicht ändern. Das PSS-System löst dann eine oder mehrere Aktionen zur Abwendung der Kollision oder zur Milderung der Kollisionsfolgen jeweils dann aus, wenn die "time to collision" einen für die betreffende Aktion vorgesehenen Schwellenwert unterschreitet. Auch in dieser Druckschrift wird vorgeschlagen, für die Objektortung radarbasierte Systeme und bildverarbeitungsbasierte Systeme miteinander zu kombinieren, doch wird nicht näher ausgeführt, in welcher Weise die Daten dieser Systeme miteinander kombiniert werden sollen.

WO 2005/098782 A1 beschreibt ein Verfahren, mit dem bei einem videobasierten System die "time to collision" anhand der Änderung des Skalenfaktors eines erkannten Objekts von Meßzyklus zu Meßzyklus berechnet werden kann, ohne daß die Objektabstände zu den jeweiligen Meßzeitpunkten genau bekannt sein müssen.

Aus der WO 03/031228 ist eine Objekterfassungsvorrichtung für FahrerAssistenzsysteme in Kraftfahrzeugen bekannt, mit mindestens zwei Sensorsystemen, die Daten über den Ort und/oder Bewegungszustand von Objekten in der Umgebung des Fahrzeugs messen und deren Detektionsbereiche einander überlappen, wobei durch eine Fehlererkennungseinrichtung, die die von den Sensorsystemen gemessenen Daten auf ihre Widerspruchsfreiheit prüft und bei Erkennung eines Widerspruchs ein Fehlersignal ausgibt.

Offenbarung der Erfindung

Aufgabe der Erfindung ist es, ein Verfahren zur Objektplausibilisierung anzugeben, das eine zuverlässigere Plausibilisierung der von beiden Ortungssystemen georteten Objekte ermöglicht.

Diese Aufgabe wird bei einem Verfahren der eingangs genannten Art erfindungsgemäß dadurch gelöst, daß der Parameter, der durch die beiden für die Konsistenzprüfung herangezogenen Meßgrößen repräsentiert wird, die vorausberechnete Zeit bis zur Kollision des Fahrzeugs mit dem Objekt (also die "time to collision") ist.

Erfindungsgemäß wird somit aus den Ortungsdaten, die mit jedem einzelnen Objektortungssystem gewonnen werden, zunächst eine Meßgröße für die "time to collision" berechnet, und zur Objektplausibilisierung werden dann diese beiden unabhängig voneinander gewonnenen Werte für die "time to collision" miteinander verglichen. Bei hinreichender Übereinstimmung dieser beiden Werte kann mit hoher Sicherheit davon ausgegangen werden, daß beide Objektortungssysteme dasselbe Objekt geortet haben und die von diesem Objekt ausgehende Kollisionsgefahr zutreffend eingeschätzt haben, denn es ist äußerst unwahrscheinlich, das beide Systeme dieselbe "time to collision" liefern wenn die Ortungsdaten eines der beiden Systeme auf einem Meßfehler oder Interpretationsfehler basieren.

Das erfindungsgemäße Verfahren umgeht auf diese Weise die Unsicherheiten, die aus der Schwierigkeit resultieren, die für verschiedene Objekte von den beiden Ortungssystemen erhaltenen Ortungsdaten einander richtig zuzuordnen.

Für den Abgleich der Ortungsdaten der beiden Ortungssysteme werden somit keine komplizierten Plausibilisierungsalgorithmen benötigt, sondern die Plausibilisierung besteht einfach in dem Vergleich zweier Zahlenwerte. Die Plausibilisierung läßt sich daher mit hoher Zuverlässigkeit und dennoch in äußerst kurzer Zeit bewerkstelligen, so daß insbesondere bei PSS-Systemen wertvolle Zeit gespart wird.

Vorteilhafte Ausgestaltungen ergeben sich aus den Unteransprüchen.

Besonders vorteilhaft ist die Erfindung, wenn eines der beiden Objektortungssysteme ein FMCW-Radar (Frequency Modulated Continuos Wave) ist, das bereits heute in vielen Fahrerassistenzsystemen als Radar-Objektortungssystem eingesetzt wird. Bei einem FMCW-Radar wird durch Mischen des an einem solchen Objekt reflektierten und wieder vom Sensor empfangenen Signals mit dem zum Empfangszeitpunkt von diesem Sensor gesendeten Signal ein Zwischenfrequenzsignal erzeugt, das den Frequenzunterschied zwischen dem gesendeten und dem empfangenen Signal angibt. Aus diesem Zwischenfrequenzsignal läßt sich die "time to collision" bestimmen. Man erhält auf diese Weise durch ein sehr schnelles und wenig fehleranfälliges Verfahren eine der beiden Meßgrößen, die für die Konsistenzprüfung benötigt wird.

Wenn das andere Objektortungssystem ein videobasiertes Systems ist, kann aus der Änderung des Skalenfaktors des Objekts ebenfalls direkt eine Meßgröße für die "time to collision" berechnet werden, wie aus WO 2005/098782 bekannt ist. Insgesamt erhält man so für die "time to collision" durch sehr schnelle und sichere Algorithmen zwei Meßgrößen, die dann nur noch auf Übereinstimmung überprüft zu werden brauchen.

Wenn mit beiden Objektortungssystemen gleichzeitig mehrere Objekte geortet werden, erhält man für jedes Objekt zwei Meßgrößen für die "time to collision", und durch Vergleich dieser Meßgrößen kann jedes Objekt plausibilisiert werden. Für ein PSS-System hat naturgemäß die kleinste "time to collision" die weitaus höchste Relevanz, und es kann somit ohne Zeitverlust ein Warnsignal ausgegeben werden bzw. eine Aktion ausgelöst werden, sobald die von den beiden Objektortungssystemen gemessenen kleinsten Meßgrößen für die "time to collision" übereinstimmen.

Wenn zwei Meßgrößen für die "time to collision" übereinstimmen, so ist damit zugleich das betreffende Objekt plausibilisiert, d. h., es kann angenommen werden, daß die von den beiden Ortungssystemen gelieferten Ortungsdaten dasselbe physikalische Objekt beschreiben. Diese Ortungsdaten lassen sich dann so miteinander fusionieren, daß man unter Ausnutzung der jeweiligen Stärken der beiden Ortungssysteme ein Höchstmaß an Genauigkeit und Zuverlässigkeit für die Ortungsdaten des betreffenden Objekts erreicht.

Im Fall eines FMCW-Radar löst die Erfindung zugleich auch ein Problem, das als Problem der "Scheinobjekte" bekannt ist. Das Zwischenfrequenzsignal, das bei einem FMCW-Radar in einem einzelnen Meßvorgang für ein einzelnes Objekt erhalten wird, ist sowohl vom Abstand dieses Objekts als auch von der Dopplerverschiebung und damit von der Relativgeschwindigkeit des Objekts abhängig und liefert somit weder für den Abstand noch für die Relativgeschwindigkeit direkt einen genauen Meßwert, sondern lediglich eine Beziehung zwischen Abstand und Relativgeschwindigkeit, die für das betreffende Objekt gelten muß. Um diese Mehrdeutigkeit zu beseitigen, wird bei einem FMCW-Radar die Frequenz des gesendeten Radarsignals mit mindestens zwei unterschiedlichen Frequenzrampen moduliert. Für ein gegebenes Objekt hält man dann für jede der beiden Frequenzrampen eine andere Beziehung zwischen Abstand und Relativgeschwindigkeit, und die "richtigen" Werte für den Abstand und der Relativgeschwindigkeit sind diejenigen Werte, bei denen beide Beziehungen erfüllt sind.

Dabei muß allerdings vorausgesetzt werden, daß sich die Meßdaten, die auf den beiden Frequenzrampen gewonnen wurden, sich wirklich auf dasselbe Objekt beziehen. Wenn mehrere Objekte gleichzeitig geortet werden, gibt es unterschiedliche Möglichkeiten, die auf den verschiedenen Frequenzrampen gemessenen Objekte miteinander zu identifizieren, und man erhält neben den "richtigen" Objektpaaren, die reale Objekte beschreiben, auch eine Anzahl von sogenannten Scheinobjekten, die durch eine fehlerhafte Zuordnung der Radarechos vorgetäuscht werden. Durch Verwendung von drei oder mehr unterschiedlichen Frequenzrampen läßt sich das Auftreten solcher Scheinobjekte reduzieren, jedoch nicht immer vollständig unterdrücken.

Bei dem erfindungsgemäßen Verfahren kann nun die "time to collision", die unabhängig mit Hilfe des zweiten Ortungssystems gewonnen wird, als zusätzliches Kriterium benutzt werden, um echte Objekte und Scheinobjekte zu unterscheiden. Auch die "time to collision" repräsentiert nämlich für jedes Objekt eine bestimmte Beziehung zwischen Abstand und Relativgeschwindigkeit, und nur bei realen Objekten wird diese Beziehung mit den Beziehungen konsistent sein, die man aus den Zwischenfrequenzsignalen auf zwei Frequenzrampen erhalten hat. Auf diese Weise erlaubt es die Erfindung, zuverlässig zwischen echten Objekten und Scheinobjekten zu unterscheiden.

Kurze Beschreibung der Zeichnungen

Ein Ausführungsbeispiel der Erfindung ist in den Zeichnungen dargestellt und in der nachfolgenden Beschreibung näher erläutert.

Es zeigen:

Fig. 1        ein Blockdiagramm eines Fahrerassistenzsystems zur Ausführung des erfindungsgemäßen Verfahrens;

Fig. 2        eine Seitenansicht eines mit dem Fahrerassistenzsystem ausgerüsteten Fahrzeugs und eines vorausfahrenden Fahrzeugs;

Fig. 3 und 4   Videobilder eines bildbasierten Objektortungssystems;

Fig. 5        eine Skizze zur Illustration eines Verfahrens zur Bestimmung einer "time to collision" anhand der Videobilder gemäß Fig. 3 und 4;

Fig. 6        ein Frequenz/Zeit-Diagramm für ein FMCW-Radar; und

Fig. 7        ein v/d-Diagramm zur Illustration von Beziehungen zwischen den Abständen und Relativgeschwindigkeiten georteter Objekte, die bei dem erfindungsgemäßen Verfahren ausgenutzt werden.

Ausführungsformen der Erfindung

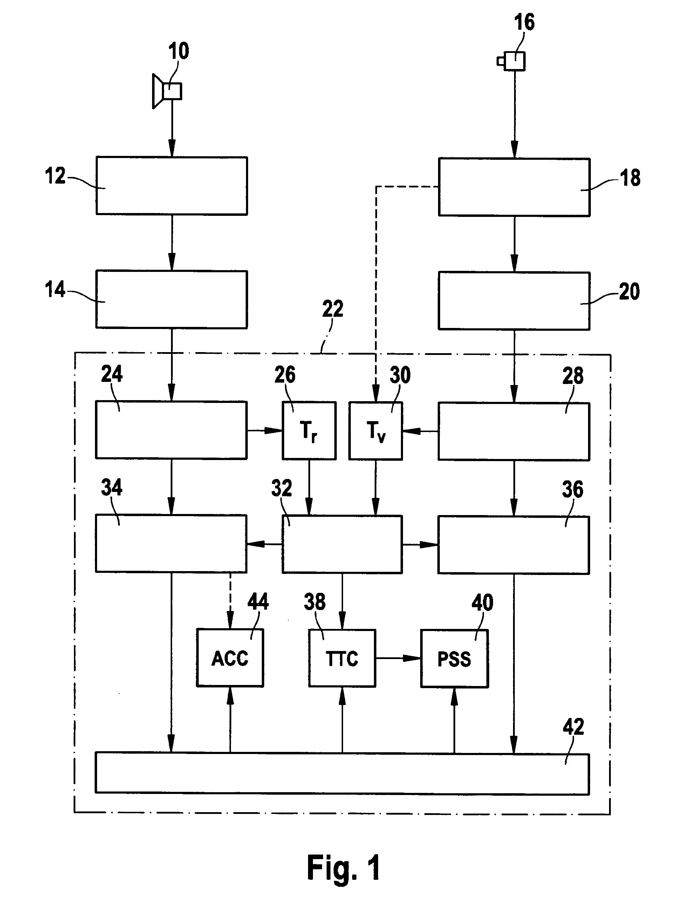

In Fig. 1 ist ein Fahrerassistenzsystem für ein Kraftfahrzeug, in diesem Beispiel eine Kombination aus einem Abstandsregelsystem (ACC) und einem prädiktiven Sicherheitssystem (PSS), als Blockdiagramm dargestellt. Das System umfaßt zwei unabhängig voneinander arbeitende Objektortungssysteme zur Erfassung des Vorfelds des mit dem Fahrerassistenzsystems ausgerüsteten Fahrzeugs.

Ein erstes Objektortungssystem wird durch einen Radarsensor 10, im gezeigten Beispiel ein FMCW-Radar, gebildet. Die empfangenen Radarsignale werden in einer Auswertungsstufe 12 vorverarbeitet, so daß man Ortungsdaten 14 für eines oder mehrere geortete Objekte erhält. Jedes Objekt wird durch einen Satz von Ortungsdaten beschrieben, der den Abstand, die Relativgeschwindigkeit und den Azimutwinkel des Objekts umfaßt. Die Radarmessungen erfolgen zyklisch mit einer Periode in der Größenordnung von 100 ms, so daß die Ortungsdaten 14 in kurzen Intervallen aktualisiert werden.

Als zweites Objektortungssystem ist ein monokulares Videosystem mit einer vorn im Fahrzeug eingebauten, nach vorn gerichteten Videokamera 16 und einem zugehörigen Bildverarbeitungsmodul 18 vorgesehen. Das Bildverarbeitungsmodul 18 wertet die periodisch von der Videokamera 16 aufgenommenen digitalen Bilder aus und erkennt in diesen Bildern vordefinierte Objektklassen, beispielsweise Fahrzeuge, Personen, Leitplanken, Fahrbahnmarkierungen und dergleichen. Im Rahmen der Erfindung sind vor allem Objekte von Bedeutung, die als potentielle Hindernisse in Frage kommen, also insbesondere vorausfahrende (oder stehende) Fahrzeuge. Für diese Objekte liefert das Bildverarbeitungsmodul 18 Ortungsdaten 20, die für jedes geortete Objekt den Abstand, die laterale Position (Azimutwinkel) und die laterale Ausdehnung des Objekts (z. B. Fahrzeugbreite) umfassen.

Die Ortungsdaten 14 und 20, die mit den verschiedenen Objektortungssystemen gewonnen wurden, sind unabhängig voneinander, beschreiben jedoch zum Teil identische oder äquivalente physikalische Größen, beispielsweise den Objektabstand sowie die laterale Position des Objekt, die sich aus dem vom Radarsensor gemessenen Abstand und Azimutwinkel berechnen läßt.

Kernstück des Fahrerassistenzsystems ist ein elektronisches Datenverarbeitungssystem 22, das durch einen Rechner und zugehörige Software gebildet wird und die von den beiden Objektortungssystemen gelieferten Ortungsdaten 14, 20 auswertet. Ein Tracking-Modul 24 dient dazu, die vom Radarsensor 10 in aufeinanderfolgenden Meßzyklen gelieferten Ortungsdaten 14 in bekannter Weise miteinander abzugleichen, um so die in einem Zyklus georteten Objekte mit den im vorherigen Zyklus georteten Objekten zu identifizieren und die Bewegungen der Objekte zu verfolgen. Ein ttc-Modul 26 berechnet anhand der Daten des Tracking-Moduls 24 eine auf den Radardaten basierende "time to collision", die hiermit $T_r$ bezeichnet ist und für jedes geortete Objekt die vorausberechnete Zeit angibt, die bis zur Kollision des eigenen Fahrzeugs mit dem betreffenden Objekt noch vergehen würde, sofern man unterstellt, daß sich die dynamischen Daten des eigenen Fahrzeugs und des Objekts in der Zwischenzeit nicht ändern.

Es versteht sich, daß diese time to collision in erster Linie für Objekte berechnet wird, die sich innerhalb des voraussichtlichen Fahrkorridors des eigenen Fahrzeugs befinden, doch läßt sich diese time to collision auch für abseits des Fahrkorridors gelegene Objekte berechnen, indem man sich auf eine eindimensionale Betrachtung beschränkt, bei der nur die Koordinaten in Längsrichtung des Fahrzeugs berücksichtigt werden.

Auch die Ortungsdaten 20 des Videosystems werden periodisch aktualisiert, mit einer Periode, die nicht notwendigerweise mit der Meßperiode des Radarsensors 10 identisch sein muß. Ein weiteres Tracking-Modul 28 dient deshalb dazu, anhand der periodisch eintreffenden Ortungsdaten 20 die georteten Video-Objekte zu verfolgen. Analog zu dem ttc-Modul 26 ist ein weiteres ttc-Modul 30 dazu vorgesehen, eine time to collision $T_v$ für jedes geortete Video-Objekt zu berechnen. Diese Berechnung erfolgt im gezeigten Beispiel ebenfalls anhand der Daten des zugehörigen Tracking-Moduls 28, kann jedoch wahlweise oder zusätzlich auch anhand der Daten des Bildverarbeitungsmoduls 18 erfolgen. Es ist auch denkbar, daß die Funktion des ttc-Moduls 30 in das Bildverarbeitungsmodul 18 integriert ist oder umgekehrt das Bildverarbeitungsmodul 18 in das Datenverarbeitungssystem 22 integriert ist.

In einem Vergleichsmodul 32 werden die von den beiden ttc-Modulen 26, 30 berechneten Meßgrößen $T_r$ und $T_v$, die auf unabhängig voneinander erhobenen Ortungsdaten basieren, miteinander verglichen. Wenn diese beiden Meßgrößen innerhalb bestimmter Genauigkeitsgrenzen übereinstimmen, so kann davon ausgegangen werden, daß die betreffenden Objekte, die einerseits durch die Ortungsdaten 14 und andererseits durch die Ortungsdaten 20 repräsentiert werden, ein und demselben physikalischen Objekt entsprechen. Diese Information wird in einem Plausibilisierungsmodul 34 dazu benutzt, die vom Tracking-Modul 24 verfolgten Radar-Objekte zu plausibilisieren, d. h., wenn für ein gegebenes Objekt eine Übereinstimmung der beiden Meßgrößen für die time to collision festgestellt wird, so bedeutet dies, daß die Objektortung mit Hilfe des Radarsensors 10 durch die Objektortung mit Hilfe des Videosystems bestätigt wurde, und man erhält somit erhöhte Gewißheit, daß es sich bei dem betreffendes Objekt um ein reales Objekt handelt.

Diese Plausibilisierung kann sich auch auf die Objektklassifizierung beziehen. Beispielsweise besteht bei Radarsystemen, insbesondere bei der Ortung von unbeweglichen Objekten, das Problem, daß sich das Radarecho eines echten Hindernisses, etwa eines stehenden Fahrzeugs, kaum von Radarechos unterscheiden läßt, die von irrelevanten Objekten wie beispielsweise Kanaldeckeln oder sonstigen kleinen Objekten auf der Fahrbahn ausgehen. Das Videosystem wird dagegen von vornherein nur die vordefinierten Objektklassen erkennen und wird deshalb Kanaldeckel und dergleichen ignorieren. Die vom Vergleichsmodul 32 gelieferte Information kann deshalb auch zur Bestätigung dienen, daß es sich bei dem vom Radarsensor georteten stehenden Objekt um ein echtes Hindernis handelt.

Ebenso kann im Plausibilisierungsmodul 34 auch eine gewisse Präzisierung der vom Radarsensor gelieferten Ortungsdaten erfolgen. Beispielsweise läßt sich mit Hilfe des Radarsensors die laterale Ausdehnung eines Objekts nur ungefähr anhand der Stärke des Radarechos und/oder der Verteilung der Azimutwinkel abschätzen. Ein sehr ausgedehntes Objekt, beispielsweise ein vorausfahrender LKW, kann auch mehrere Radarechos erzeugen, die von verschiedenen Reflexpunkten am LKW resultieren. Allein aufgrund der Radardaten ist es dann oft schwierig zu entscheiden, ob zwei Radarechos zu demselben Objekt oder zu verschiedenen Objekten gehören. Wenn nun für zwei Radarechos vom ttc-Modul 26 dieselbe time to collision berechnet wird, das Vergleichsmodul 32 aber meldet, daß das Videosystem nur ein einziges Objekt mit dieser time to collision geortet hat, so ist klar, daß die beiden Radarechos von demselben Objekt stammen. Auf diese Weise kann im Plausibilisierungsmodul 34 die Information über die laterale Ausdehnung des Objekts präzisiert werden.

Auch dem Tracking-Modul 28 für die Video-Objekte ist ein Plausibilisierungsmodul 36 nachgeschaltet, mit dem auf analoge Meise die Video-Objekte bei Übereinstimmung der beiden Meßgrößen $T_r$ und $T_v$ plausibilisiert werden.

Das Vergleichsmodul 32 liefert bei Übereinstimmung der beiden Meßgrößen $T_r$ und $T_v$ zugleich einen Parameter TTC, der den beiden übereinstimmenden Meßgrößen entspricht. Dieser Parameter TTC wird von einem TTC-Fusionsmodul 38 als "bestätigte" time to collision an ein PSS-Modul 40 übermittelt, d. h., an den Teil des Fahrerassistenzsystems, der für die prädiktive Sicherheitsfunktion verantwortlich ist.

Wenn nun der kleinste der in dieser Weise innerhalb eines Meßzyklus erhaltenen Parameter TTC einen im PSS-Modul 40 festgelegten Schwellenwert unterschreitet, so löst dies eine entsprechende Aktion des PSS-Systems aus, beispielsweise die Ausgabe eines Warnsignals an den Fahrer und/oder einen Eingriff in die Längsführung des Fahrzeugs. Dies ermöglicht eine sehr frühzeitige Ausgabe des Warnsignals, ohne daß die Ergebnisse der Plausibilisierungsprozeduren in den Plausibilisierungsmodulen 34 und 36 abgewartet werden müssen.

Selbstverständlich sollte der Parameter TTC nur für solche Objekte übergeben werden, die von beiden Objektortungssystemen innerhalb des voraussichtlichen Fahrkorridors des eigenen Fahrzeugs verortet wurde. Wenn die ttc-Module 26 und 30 auch Meßgrößen $T_r$ und $T_v$ für Objekte berechnen, die außerhalb des voraussichtlichen Fahrkurses liegen, so kann zu diesem Zweck über das Vergleichsmodul 32 zusammen mit der Meßgröße ein Flag übermittelt werden, das angibt, ob das Objekt innerhalb oder außerhalb des Fahrkorridors liegt.

In einem Datenfusionsmodul 42 werden die in den Plausibilisierungsmodulen 34 und 36 plausibilisierten und gegebenenfalls präzisierten Ortungsdaten der Objekte miteinander fusioniert, d. h., es wird nun für jedes geortete Objekt ein einheitlicher Datensatz gebildet, der den Ort, die Relativgeschwindigkeit, die laterale Position und die laterale Ausdehnung des Objekts angibt. Bei dieser Datenfusion wird die jeweilige Meßgenauigkeit der Objektortungssysteme berücksichtigt. So wird beispielsweise der Wert für den Objektabstand maßgeblich durch die Daten des Radarsensors 10 bestimmt sein, während bei der Fusion der Daten für diese laterale Position und die laterale Ausdehnung des Objekts die Daten des Videosystems ein höheres Gewicht erhalten werden.

Anhand der in dieser Weise präzisierten Daten kann unter anderem auch ein neuer Wert für den Parameter TTC, also die time to collision, berechnet werden. Bei Annahme einer konstanten Relativgeschwindigkeit wird dieser Parameter TCC der Quotient aus dem Abstand und der Relativgeschwindigkeit sein, die im Datenfusionsmodul 42 berechnet wurden. Auf dieser Stufe ist es jedoch auch möglich, etwaige Beschleunigungen des eigenen Fahrzeugs oder des georteten Objekts zu berücksichtigen und in die Zukunft zu extrapolieren, so daß man einen genaueren Schätzwert für die time to collision erhält. Im TTC-Fusionsmodul 38 wird dann dieser genauere Wert mit dem vom Vergleichsmodul 32 gelieferten vorläufigen Wert fusioniert, oder er ersetzt den vorläufigen Wert, so daß das PSS-Modul 40 mit einem genaueren Schätzwert für die time to collision arbeiten kann.

Für die Zwecke der Objektplausibilisierung werden dagegen bei diesem Ausführungsbeispiel die Meßgrößen $T_r$ und $T_v$ nur in erster Näherung berechnet, das heißt, unter Annahme konstanter Geschwindigkeiten. Das ergibt zwar für die tatsächliche time to collision nur relativ ungenaue Schätzwerte, vereinfacht jedoch die Berechnungen und liefert für die Objektplausibilisierung ein Verfahren, das nicht weniger empfindlich ist als bei Verwendung höherer Näherungen.

Da im Datenfusionsmodul 42 auch die laterale Position und die Lateralausdehnung des Objekts genauer bestimmt werden, können diese Daten an das PSS-Modul übergeben werden, so daß dann in diesem Modul aufgrund der genaueren Daten erneut entschieden werden kann, ob eine Möglichkeit besteht, das Objekt zu umfahren, und in dem Fall können einige oder alle der vom PSS-Modul vorgesehenen Aktionen ausgesetzt werden.

Eine zweckmäßige Ausführungsform kann darin bestehen, daß das PSS-Modul 40 einen Warnhinweis an den Fahrer ausgibt, sobald ein vom Vergleichsmodul 32 gelieferter Parameter TTC unter dem betreffenden Schwellenwert liegt, daß jedoch automatische Eingriffe in die Längsführung des Fahrzeugs erst auf der Grundlage der genaueren Daten des Datenfusionsmoduls 42 erfolgen.

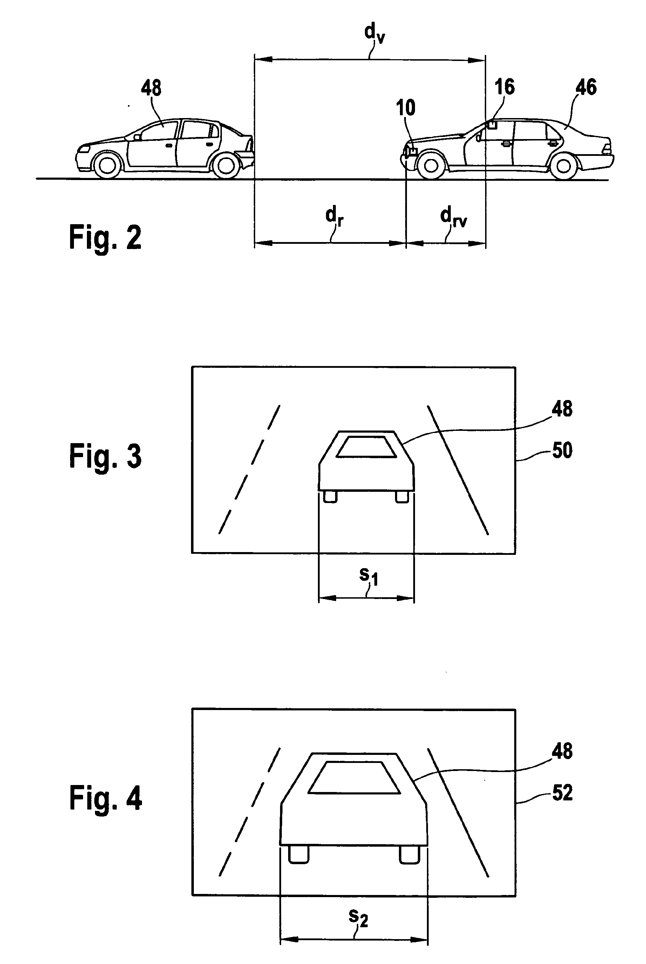

Die vom Datenfusionsmodul 42 berechneten genaueren Ortungsdaten der Objekte, insbesondere für das unmittelbar vorausfahrende Fahrzeug, werden auch an ein ACC-Modul 44 übergeben, das automatisch den Abstand zum vorausfahrenden Fahrzeug regelt. In einer modifizierten Ausführungsform kann das ACC-Modul 44 die Ortungsdaten jedoch auch direkt vom Plausibilisierungsmodul 34 erhalten, wie in Fig. 1 durch einen gestrichelten Pfeil angedeutet wird. In dem Fall wird das Videosystem nur zu Objektplausibilisierung benutzt, während die Abstandsregelung ansonsten allein anhand der Daten des Radarsensors 10 erfolgt. In Fig. 2 ist ein Fahrzeug 46, das mit dem Fahrerassistenzsystem gemäß Fig. 1 ausgerüstet ist, in einer Seitenansicht dargestellt. Weiterhin ist ein vorausfahrendes Fahrzeug 48 dargestellt. Für dieses vorausfahrende Fahrzeug 48 mißt der Radarsensor 10 den Abstand $d_r$. Das Videosystem mißt für dasselbe Fahrzeug 48 den Abstand d, der im allgemeinen etwas größer sein wird, weil die Videokamera 16 axial versetzt zu dem Radarsensor 10 im Fahrzeug 46 eingebaut sein wird. Der Abstand zwischen dem Radarsensor 10 und dem Videosensor 16 in Längsrichtung des Fahrzeugs 46 ist in Fig. 2 mit $d_{rv}$ bezeichnet. Dieser Abstand muß bei der Datenfusion und auch bei der Berechnung der Meßgrößen $T_r$ und $T_v$ für die time to collision berücksichtigt werden.

Anhand der Figuren 3 bis 5 soll nun zunächst erläutert werden, wie anhand der Daten des Videosystems die Meßgröße $T_v$ für die time to collision berechnet wird. Fig. 3 zeigt ein Bild 50, das zu einem bestimmten Zeitpunkt mit der Videokamera 16 aufgenommen wird. In diesem Bild ist die Silhouette des vorausfahrenden Fahrzeugs 48 zu erkennen. Durch digitale Bildverarbeitung wird aus dem Bild eine scheinbare Breite $s_1$ des vorausfahrenden Fahrzeugs 48 extrahiert.

Fig. 4 zeigt ein Bild 52, das zu einem etwas späteren Zeitpunkt, etwa einen Video-Meßzyklus später, von der Videokamera 16 aufgenommen wird. Es sei hier angenommen, daß die Relativgeschwindigkeit des Fahrzeugs 48 negativ ist, d. h., der Abstand zwischen den Fahrzeugen 48 und 46 nimmt ab. In dem Bild 52 erscheint daher die Silhouette des Fahrzeugs 48 um einen gewissen Skalierungsfaktor vergrößert, da das Fahrzeug inzwischen näher gekommen ist. Die scheinbare Breite des Fahrzeugs 48 beträgt in diesem Fall $s_2$.

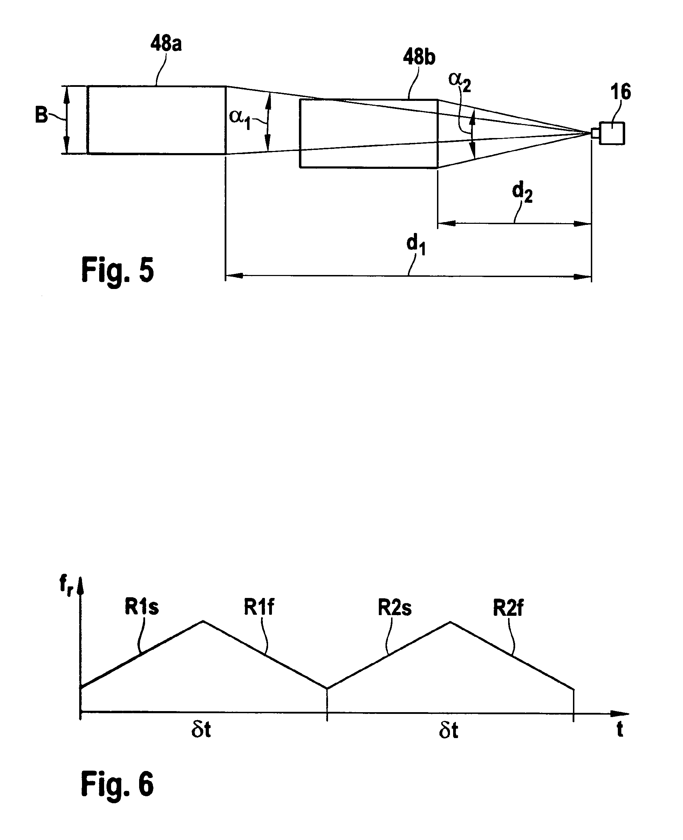

In Fig. 5 ist die Situation zu den Zeitpunkten, zu denen die Bilder 50 und 52 aufgenommen wurden, in einem schematischen Grundriß dargestellt. Die Position des Fahrzeugs 48 bei Aufnahme des Bildes 50 ist mit 48a bezeichnet, und die Position der Aufnahme des Bildes 52 mit 48b. Das Fahrzeug 48 hat die (konstante) Breite B. In der Position 48a entspricht diese Breite B einem Breitenwinkel $\alpha_1 = B/d_1$. Für die scheinbar Breite s1 des Fahrzeugs 48 im Bild 50 gilt demgemäß:

$$s_1 = k * \alpha_1 = k * B/d_1 \qquad (1)$$

mit einer geeigneten Maßstabskonstanten k für das Bild 50.

Entsprechend gilt für die Position 48b:

$$s_2 = k * \alpha_2 = k * B/d_2 \qquad (2)$$

Für die Abstände $d_1$ und $d_2$ gilt folglich

$$d_1 = k * B/s_1 \qquad (3)$$

und

$$d_2 = k * B/s_2 \qquad (4)$$

Die Meßgröße $T_v$ für die time to collision soll nun unter der vereinfachenden Annahme berechnet werden, daß sich die Videokamera 16 unmittelbar in Höhe der Vorderfront des Fahrzeugs 46 befindet. Weiterhin soll angenommen werden, daß die Relativgeschwindigkeit des Fahrzeugs 48 konstant ist. Die Anzahl der Meßzyklen, die noch mit der Videokamera 16 ausgeführt werden, bis die Kollision eintritt, ist dann gegeben durch: $d_2/(d_1 - d_2)$. Wenn die Dauer eines Meßzyklus $\Delta t$ beträgt, so gilt folglich für die time to collision:

$$T_v = \Delta t * d_2/(d_1 - d_2) \qquad (5)$$

Einsetzung von Gleichungen (3) und (4) ergibt:

$$T_v = \Delta t * (k * B/s_2)/(k * B/s_2) - (k * B/s_2)) \quad (6)$$

Die beiden unbekannten Konstanten k und B kürzen sich heraus, und erweitern mit $s_1 * s_2$ ergibt:

$$T_v = \Delta t * s_1/(s_2 - s_1) \quad (7)$$

So läßt sich die time to collision direkt aus der Änderung der Skalierung der Bilder 50, 52 berechnen, ohne daß die betreffenden Fahrzeugabstände bekannt sein müssen.

Anhand der Daten des Radarsensors 10 kann Meßgröße $T_r$ für die time to collision berechnet werden, indem einfach der gemessene Abstand durch die gemessene Relativgeschwindigkeit dividiert wird. Das herkömmliche Verfahren zur Bestimmung von Abstand und Relativgeschwindigkeit wird im folgenden kurz skizziert.

Die Frequenz des von dem Radarsensor 10 gesendeten Radarsignals ist rampenförmig moduliert, wie in Fig. 6 dargestellt ist. In einem ersten Meßzyklus steigt die Frequenz auf einer Rampe R1s linear an und nimmt dann auf einer gleich langen Rampe R1f mit entgegengesetzter Änderungsrate wieder linear ab. Im nächsten Meßzyklus wiederholt sich dies mit einer steigenden Rampe R2s und einer fallenden Rampe R2f usw.

Das an einem Objekt reflektierte und vom Radarsensor wieder empfangene Signal wird mit dem in diesem Augenblick vom Radarsensor gesendeten Signal gemischt, und als Ergebnis erhält man ein Zwischenfrequenzsignal mit einer Frequenz f, die gleich dem Frequenzunterschied zwischen dem gesendeten und dem empfangenen Signal ist.

Das auf jeder Modulationsrampe erhaltene Zwischenfrequenzsignal wird dann durch schnelle Fourier-Transformation in sein Spektrum zerlegt. In diesem Spektrum zeichnet sich jedes Objekt, von dem ein Radarecho empfangen wurde, durch einen Peak bei einer bestimmten Frequenz f ab. Wenn n die Änderungsrate der Frequenzmodulation ist, c die Lichtgeschwindigkeit, d der Abstand und v die Relativgeschwindigkeit des Objekts, so gilt für die Frequenz f:

$$f = n * 2d/c + 2f_r * v/c \quad (8)$$

In dem ersten Summanden ist 2d/s die Laufzeit des Radarsignals vom Radarsensor zum Objekt und zurück zum Radarsensor. Der zweite Summand gibt die Dopplerverschiebung aufgrund der Relativgeschwindigkeit des Objekts an.

Wie aus Gleichung (8) hervorgeht, lassen sich aufgrund einer einzelnen Messung auf einer einzelnen Frequenzrampe der Abstand und die Relativgeschwindigkeit nicht eindeutig bestimmen. Man erhält nur eine Beziehung, die diese beiden Größen erfüllen müssen. Erst wenn man zwei Messungen ausführt, eine auf einer steigenden Rampe und die andere auf einer fallenden Rampe, lassen sich v und d bestimmen. Wenn man die für die beiden Rampen erhaltenen Frequenzen addiert, heben sich (wegen des geänderten Vorzeichens von n) die abstandsabhängigen Anteile auf, so daß sich die Relativgeschwindigkeit v berechnen läßt. Bildet man umgekehrt die Differenz der beiden Frequenzen, so heben sich die Doppleranteile auf, und man kann den Abstand d berechnen.

Dazu ist es jedoch erforderlich, daß man auf beiden Rampen den Peak untersucht, der von demselben Objekt verursacht wurde. Wenn mehrere Objekte gleichzeitig geordnet werden, ist die Zuordnung der Peaks zu den Objekten nicht eindeutig. Es gibt eine Vielzahl von Kombinationen zwischen Peaks, die zu demselben Objekt gehören könnten, und nur einige dieser Kombinationen entsprechen realen Objekten, während andere Kombinationen sogenannten Scheinobjekten entsprechen, die in Wahrheit nicht existieren. Diese Mehrdeutigkeit kann dadurch reduziert werden, daß man die gesendete Frequenz $f_r$ mit einer dritten Rampe mit noch einer anderen Rampensteigung moduliert, so daß man eine zusätzliche Beziehung zwischen der Relativgeschwindigkeit und dem Abstand des Objekts erhält und dann diese Beziehungen auf ihre Konsistenz prüft. Bei realen Objekten müssen sich die drei Beziehungen, die man für drei verschiedene Rampensteigungen erhalten hat, durch ein einziges Paar aus Abstand und Relativgeschwindigkeit erfüllen lassen. Auch mit diesem Verfahren ist es jedoch nicht in allen Fällen möglich, die Mehrdeutigkeit völlig zu beseitigen.

Deshalb soll hier ein anderer Weg erläutert werden, wie die Meßgröße $T_r$ für die time to collision anhand der Daten des Radarsensors 10 berechnet werden kann, ohne daß der Abstand und die Relativgeschwindigkeit für das Objekt bestimmt werden müssen.

Für den Abstand d, die Relativgeschwindigkeit v und die gesuchte Meßgröße T für die time to collision gilt die Beziehung:

$$d = v * T_r \qquad\qquad (9)$$

Durch Einsetzen in Gleichung (8) erhält man:

$$f = n * T_r * 2v/c \;+\; 2f_r * v/c$$

$$= (2v/c) * (n*T_r + f_r) \qquad\qquad (10)$$

Wenn man wieder annimmt, daß die Relativgeschwindigkeit v konstant ist, und die Frequenzen $f_1$ und $f_2$ betrachtet, die in zwei aufeinanderfolgenden Modulationsrampen mit gleicher Steigung erhalten werden, beispielsweise aus den Rampen R1s und R2s, so unterscheiden sich die entsprechenden Gleichungen (10) für die beiden Messungen nur dadurch, daß sich die time to collision um die Dauer δt eines einzelnen Meßzyklus geändert hat.

$$f_1 = (2v/c) * (n*T_r + f_r) \qquad\qquad (11)$$

$$f_2 = (2v/c) * (n*(T_r - \delta t) + f_r) \qquad\qquad (12)$$

Für die Differenz Δf = f1 - f2 gilt also:

$$\Delta f = (2v/c) * n * \delta t \qquad\qquad (13)$$

Für die Relativgeschwindigkeit v erhält man folglich:

$$v = (c/2n) * (\Delta f/\delta t) \qquad\qquad (14)$$

Setzt man dies in Gleichung (11) ein, so erhält man:

$$f_1 = (\Delta f/n*\delta t) * (n*T_r + f_r) \qquad\qquad (15)$$

und folglich:

$$T_r = (\delta t * f_1/\Delta f) - (f_r/n) \qquad\qquad (16)$$

Auf entsprechende Weise kann die Meßgröße $T_r$ auch auf den fallenden Rampen R1f und R2f bestimmt werden. Die Rampensteigung n hat dann das entgegengesetzte Vorzeichen.

Somit läßt sich für jeden einzelnen Peak im Spektrum des Zwischenfrequenzsignals eine time to collision berechnen, ohne daß dazu der Abstand des betreffenden Objekts berechnet werden muß. Dadurch werden die Probleme umgangen die mit der Unsicherheit bei der Objektzuordnung zusammenhängen, denn man untersucht jeweils nur die Spektren, die auf Rampen mit derselben Rampensteigung gewonnen wurden. In dem Fall ist die im Tracking-Modul 24 vorgenommene Identifizierung der im aktuellen Meßzyklus erhaltenen Peaks mit dem im vorangegangenen Zyklus erhaltenen Peaks unproblematisch, da sich der Abstand und die Relativgeschwindigkeit und damit die Lage des Peaks von Meßzyklus zu Meßzyklus nur wenig ändern werden.

Im Vergleichsmodul 32 werden die unabhängig voneinander gewonnenen Meßgrößen $T_r$ und $T_v$ miteinander verglichen. Dabei ist je nach gewünschter Genauigkeit gegebenenfalls der Einfluß des Abstands $d_{rv}$ (Fig. 2) zu berücksichtigen, der zwischen dem Radarsensor 10 und der Videokamera 16 besteht. Um die Meßgröße $T_r$ im Hinblick auf den Abstand $d_{rv}$ zu normieren, wird die Relativgeschwindigkeit v des Objekts benötigt, die man beispielsweise aus Gleichung (14) erhalten kann. Für die auf den Abstand $d_{rv}$ normierte und folglich mit der Meßgröße $T_v$ vergleichbare Meßgröße $T_{norm}$ gilt:

$$T_{norm} = T_r + d_{rv}/v \qquad\qquad (17)$$

Wenn die so berechnete normierte Meßgröße $T_{norm}$ mit der Meßgröße $T_v$ übereinstimmt, so ist das Objekt plausibilisiert.

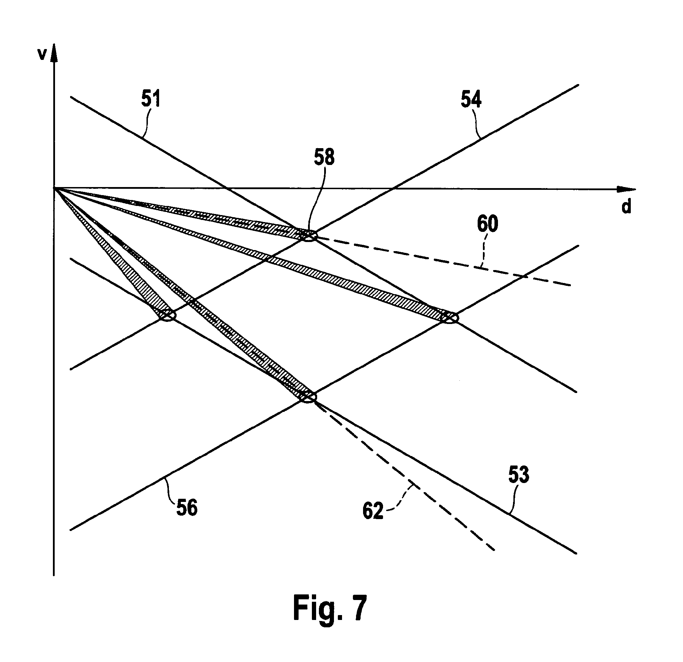

Mit Bezug auf Figur 7 soll ein modifiziertes Verfahren erläutert werden, mit dem es möglich ist, die Objekte mit Hilfe der time to collision zu plausibilisieren und zugleich bei der Radarortung das Problem der "Scheinobjekte" zu lösen. Als Beispiel soll angenommen werden, daß zwei Objekte vom Radarsensor 10 und auch vom Videosystem geortet werden.

Bei der Auswertung der Radardaten erhält man somit zwei Peaks auf der steigenden Rampe R1s in Figur 6 und zwei weitere Peaks für die dieselben Objekte auf der fallenden Rampe R1f. Die Frequenz jedes dieser Peaks definiert gemäß Gleichung (8) eine Beziehung zwischen der Relativgeschwindigkeit v und dem Abstand d des Objekts. Diese Beziehungen lassen sich in einem v/d-Diagramm gemäß Figur 7 als Geraden 51, 53, 54 und 56 darstellen. Die beiden fallenden Geraden 51 und 53 entsprechen den Peaks, die auf der Rampe R1s aufgenommen wurden (n positiv), und die beiden fallenden Geraden 54 und 56 entsprechen den Peaks, die auf der fallenden Rampe R1f aufgenommen wurden (n negativ). Die Abstands- und Relativgeschwindigkeitsdaten für ein Objekt müssen jeweils sowohl auf einer der fallenden Geraden wie auch auf einer der steigenden Geraden liegen.

Wie aus Figur 7 hervorgeht, bilden die vier Geraden 51 - 56 aber miteinander vier Schnittpunkte, die mögliche Objektdaten repräsentieren könnten. Die Schnittpunkte sind in Figur 7 als "Fehlerellipsen" 58 eingezeichnet, die jeweils die Meßungenauigkeit hinsichtlich der Abstands- und Geschwindigkeitsmessung angeben. Nur zwei dieser Schnittpunkte entsprechen realen Objekten, während es sich bei den anderen beiden Schnittpunkten um Scheinobjekte handelt. Das Problem besteht darin, unter diesen vier möglichen Objekten die beiden realen Objekte zu identifizieren.

Implizit definiert jeder der vier Schnittpunkte über Gleichung (9) auch eine zugehörige Meßgröße $T_r$ für die time to collision, nämlich die Steigung einer Geraden, die vom Koordinatenursprung (d=0, v=0) zu dem jeweiligen Schnittpunkt verläuft. Jede Fehlerellipse 58 spannt zusammen mit dem Koordinatenursprung ein Dreieck auf, das die Toleranzgrenzen für die Geradensteigung und damit die time to collision angibt.

Da die beiden Objekte auch vom Videosystem geortet werden, erhält man gemäß Gleichung (7) auch zwei Meßgrößen $T_v$, und die durch diese Meßgrößen definierten Geraden 60 und 62 sind ebenfalls in Figur 7 eingezeichnet. Nur für die beiden realen Objekte werden diese Geraden durch zugehörige Fehlerellipsen 58 gehen. Damit sind die zu den entsprechenden Schnittpunkten gehörenden Objekte als reale Objekte plausibilisiert, und bei den anderen Schnittpunkten muß es sich folglich um die Scheinobjekte handeln.

Der Einfluß des Abstands $d_{rv}$ zwischen Radarsensor und Videokamera läßt sich bei diesem Verfahren einfach berücksichtigen, indem die betreffenden Fehlerellipsen 58 um diesen Abstand auf der d-Achse verschoben werden.

**Patentansprüche**

1.   Verfahren zur Objektplausibilisierung bei Fahrerassistenzsystemen für Kraftfahrzeuge, bei dem aus Ortungsdaten von zwei unabhängig voneinander arbeitenden Objektortungssystemen (10; 16, 18) des Fahrzeugs (46) für ein Objekt (48), das von beiden Ortungsystemen geortet wird, zwei Meßgrößen ($T_r$, $T_v$) abgeleitet werden, je eine für jedes Ortungssystem, die ein und denselben physikalischen Parameter (TTC) repräsentieren, und bei dem dann die beiden Meßgrößen auf Konsistenz geprüft werden indem diese miteinander verglichen werden, **dadurch gekennzeichnet, daß** der Parameter (TTC) die vorausberechnete Zeit bis zur Kollision des Fahrzeugs (46) mit dem Objekt (48) ist.

2.   Verfahren nach Anspruch 1, **dadurch gekennzeichnet, daß** eines der beiden Ortungssysteme (16, 18) ein videobasiertes System ist, und daß die zugehörige Meßgröße ($T_v$) direkt aus der Änderung der scheinbaren Objektgröße

($s_1$, $s_2$) in zwei zu verschiedenen Zeiten aufgenommenen Videobildern (50, 52) berechnet wird.

**3.** Verfahren nach Anspruch 1 oder 2, **dadurch gekennzeichnet, daß** eines der beiden Objektortungssysteme (10) ein FMCW-Radar ist.

**4.** Verfahren nach Anspruch 3, **dadurch gekennzeichnet, daß** die dem FMCW-Radar zugeordnete Meßgröße ($T_r$) anhand der Änderung der Frequenz der von dem Objekt (48) empfangenen Radarsignale berechnet wird, die in verschiedenen Meßzyklen des Radarsensors für Frequenzrampen (R1s, R2s) mit gleicher Rampensteigung gemessen werden.

**5.** Verfahren nach Anspruch 3 oder 4, **dadurch gekennzeichnet, daß** für jedes vom FMCW-Radar geortete Objekt (48) anhand des auf einer Modulationsrampe (R1s) erhaltenen Signals eine Beziehung zwischen der Relativgeschwindigkeit (v) und dem Abstand (d) des Objekts bestimmt wird, die durch eine Gerade (51, 53) in einem v/d-Diagramm repräsentiert wird, daß für jedes Objekt anhand des Signals, das auf einer anderen Modulationsrampe (R1f) mit anderer Rampensteigung eine weitere Beziehung bestimmt wird, die durch eine andere Gerade (54, 56) im v/d-Diagramm repräsentiert wird, daß für jeden Schnittpunkt der Geraden (51, 53, 54, 56) eine Meßgröße ($T_r$) berechnet wird, und daß diese Meßgrößen ($T_r$) mit den vom videobasierten Ortungssystem (16, 18) erhaltenen Meßgrößen ($T_v$) verglichen werden.

**6.** Verfahren nach einem der vorstehenden Ansprüche, **dadurch gekennzeichnet, daß** eine der beiden Meßgrößen ($T_r$, $T_v$) für die Zwecke des Vergleichs um den Effekt eines Abstands ($d_{rv}$) korrigiert wird, den die Sensoren (10,16) der beiden Objektortungssysteme in Längsrichtung des Fahrzeugs (46) zueinander aufweisen.

## Claims

**1.** Method for checking object plausibility in driver assistance systems for motor vehicles, in the case of which locating data of two mutually independently operating object locating systems (10; 16, 18) of the vehicle (46) are used to derive for an object (48) which is located by the two locating systems two measured variables ($T_r$, $T_v$), specifically in each case one for each locating system, which represent one and the same physical parameter (TTC), and in the case of which the two measured variables are then checked for consistency by being compared with one another, **characterized in that** the parameter (TTC) is the previously calculated time up to the collision of the vehicle (46) with the object (48).

**2.** Method according to Claim 1, **characterized in that** one of the two locating systems (16, 18) is a video-based system, and **in that** the associated measured variable ($T_v$) is calculated directly from the change in the apparent object size ($s_1$, $s_2$) in two video images (50, 52) recorded at different times.

**3.** Method according to Claim 1 or 2, **characterized in that** one of the two object locating systems (10) is an FMCW radar.

**4.** Method according to Claim 3, **characterized in that** the measured variable ($T_r$) assigned to the FMCW radar is calculated with the aid of the change in the frequency of the radar signals which are received from the object (48) and are measured in different measurement cycles of the radar sensor for frequency ramps (R1s, R2s) having the same ramp gradient.

**5.** Method according to Claim 3 or 4, **characterized in that** for each object (48) located by the FMCW radar the signal obtained on a modulation ramp (R1s) is used to determine a relationship between the relative speed (v) and the distance (d) of the object, which relationship is represented as a straight line (51, 53) in a v/d diagram, **in that** for each object the signal that is obtained on another modulation ramp (R1f) with another ramp gradient is used to determine a further relationship which is represented by another straight line (54, 56) in the v/d diagram, **in that** a measured variable ($T_r$) is calculated for each point of intersection of the straight lines (51, 53, 54, 56), and **in that** these measured variables ($T_r$) are compared with the measured variables ($T_v$) obtained from the video-based locating system (16, 18).

**6.** Method according to one of the preceding claims, **characterized in that** for the purpose of comparison one of the two measured variables ($T_r$, $T_v$) is corrected for the effect of a distance ($d_{rv}$) which the sensors (10, 16) of the two object locating systems exhibit from one another in a longitudinal direction of the vehicle (46).

**Revendications**

1. Procédé de plausibilisation d'objets dans des systèmes d'assistance au conducteur de véhicules automobiles, dans lequel deux grandeurs de mesure ($T_r$, $T_v$) sont dérivées de données de localisation, provenant de deux systèmes (10; 16, 18) de localisation d'objets qui travaillent indépendamment l'un de l'autre dans le véhicule (46) d'un objet (48) qui a été localisé par les deux systèmes de localisation,
chacune des grandeurs de mesure correspondant à un système de localisation et les grandeurs de mesure représentant un seul et même paramètre physique (TTC), et
dans lequel la cohérence des deux grandeurs de mesure est ensuite vérifiée en les comparant, **caractérisé en ce que** le paramètre (TTC) est le temps préalablement calculé qui s'écoulerait jusqu'à la collision du véhicule (46) avec l'objet (48).

2. Procédé selon la revendication 1, **caractérisé en ce que** l'un des deux systèmes de localisation (16, 18) est un système à base vidéo et **en ce que** la grandeur de mesure ($T_v$) qui lui est associée est calculée directement à partir de la modification de la taille apparente ($s_1$, $s_2$) de l'objet dans deux images vidéo (50, 52) enregistrées à des instants différents.

3. Procédé selon les revendications 1 ou 2, **caractérisé en ce que** l'un des deux systèmes (10) de localisation d'objets est un radar FMCW.

4. Procédé selon la revendication 3, **caractérisé en ce que** la grandeur de mesure ($T_r$) associée au radar FMCW est calculée sur base de la modification de la fréquence des signaux radar reçus en provenance de l'objet (48), qui est mesurée dans différents cycles de mesure du détecteur radar à des pentes de fréquence (R1s, R2s) qui présentent la même pente.

5. Procédé selon les revendications 3 ou 4, **caractérisé en ce que** pour chaque objet (48) localisé par le radar FMCW, une relation entre la vitesse relative (v) et la distance (d) de l'objet est déterminée à l'aide du signal reçu sur une pente de modulation (R1s), la relation étant représentée par une droite (51, 53) dans un diagramme v/d, **en ce que** pour chaque objet, une autre relation est déterminée à l'aide du signal reçu sur une autre pente de modulation (R1f) qui présente une autre valeur de pente, la relation étant représentée par une autre droite (54, 56) dans le diagramme v/d, **en ce que** pour chaque point de concours entre les droites (51, 53, 54, 56), une grandeur de mesure ($T_r$) est calculée et **en ce que** ces grandeurs de mesure ($T_r$) sont comparées aux grandeurs de mesure ($T_v$) obtenues par le système de localisation (16, 18) à base vidéo.

6. Procédé selon l'une des revendications précédentes, **caractérisé en ce qu'**en vue de la comparaison, l'effet exercé sur l'une des deux grandeurs de mesure ($T_r$, $T_v$) par la distance ($d_{rv}$) qui sépare les détecteurs (10, 16) des deux systèmes de localisation d'objets dans le sens de la longueur du véhicule (46) est corrigé.

**Fig. 1**

**Fig. 2**

$d_v$

48     10     16     46

$d_r$     $d_{rv}$

**Fig. 3**

48
50

$s_1$

**Fig. 4**

48
52

$s_2$

**Fig. 5**

**Fig. 6**

**Fig. 7**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10399943 A1
- DE 102004046360 A1
- WO 2005098782 A1
- WO 03031228 A
- WO 2005098782 A